# EUROPEAN PATENT APPLICATION

(11) **EP 1 605 466 A1**
(43) Date of publication of application: **14.12.2005**
(21) Application number: 05010252.4
(22) Date of filing: 11.05.2005
(51) Int. Cl.: G11B 27/034

(54) **Transcoding closed captioning data from broadcast DTV onto DVD**

(30) Priority: 10.06.2004 US 865372
(71) Applicant: Broadcom Corporation, Irvine, CA 92618-7013 (US)
(72) Inventor: Fu, Jiang c/o Broadcom Corporation, Irvine California 92618-7013 (US); Chen, Sherman (Xuemin), 92129 San Diego, CA (US)
(74) Representative: Jehle, Volker Armin

(57) **Abstract**

One or more methods and systems of transcoding closed captioned data from a DTV video format to a DVD video format are presented. In one embodiment, the method comprises generating a DVD by transcoding closed captioned data from one or more picture user data segments of a DTV formatted video stream to that of a GOP user data segment of a DVD formatted video stream. In one embodiment, a system for generating a DVD that is capable of displaying closed captioned data comprises a memory, a set of software instructions resident in the memory, a control processor for executing the set of software instructions, and circuitry.

## Description

### BACKGROUND OF THE INVENTION

Today, digital television set-top-boxes increasingly incorporate functional enhancements such as personal video recorder (PVR) functionality. PVRs utilize storage devices such as a hard drive in order to store indexing information that facilitate performing various "trick modes" such as time shifting, pausing and fast forwarding video. In addition, these set-top-boxes may incorporate DVD (digital video disk) recorders or "burners" that may be used to conveniently store broadcast digital television (DTV) video onto a compact DVD. Although a DVD recorder may be viewed as a convenient tool for the user, there are a number of challenges related to using set-top-boxes that incorporate a DVD recorder.

One of these challenges relates to recording closed captioned digital television (DTV) content onto a DVD using a DVD recorder. In such instances, the closed captioned portion of the DTV content is incapable of being decoded by a DVD player, after a DVD is burned. Hence, persons that rely on closed captioning, such as those with hearing disabilities, may suffer a loss of comprehension when playback occurs over a DVD that is conventionally recorded from closed captioned DTV video.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

Aspects of the invention provide for one or more methods and systems of transcoding closed captioned data from a digital television (DTV) video stream to that of a digital versatile disk (DVD) video stream, in order to properly display closed captioned data.

In one embodiment, a method of generating a DVD capable of displaying closed captioned data comprises transcoding closed captioned data from a DTV video stream to a DVD data stream.

In one embodiment, a method of transcoding closed captioned data from a DTV data stream into a DVD data stream comprises identifying one or more fields capable of displaying the V-chip data, identifying one or more first indicators that signifies the start of V-chip data transmission, setting a first flag to a first value if the one or more first indicators signifies the start of V-chip data transmission, and setting a second flag in the DVD data stream to a second value to disable display of the V-chip data. The method further comprises identifying one or more second indicators that signifies the end of V-chip data transmission, resetting the first flag if the one or more second indicators signifies the end of V-chip data transmission, and resetting the second flag in the DVD data stream to enable display of the closed captioned data.

In one embodiment, a method of generating a DVD capable of displaying closed captioned data comprises transcoding closed captioned data from one or more picture user data segments of a DTV formatted video stream to a GOP user data segment of a DVD formatted video stream.

In one embodiment, a system for generating a DVD that is capable of displaying closed captioned data comprises a memory, a set of software instructions resident in the memory, a control processor for executing the set of software instructions, and circuitry.
According to an aspect of the invention, a method of generating a DVD capable of displaying closed captioned data is provided, said closed captioned data derived from a closed captioned DTV data stream, said method comprising transcoding closed captioned data from said closed captioned DTV data stream to a DVD data stream.
Advantageously, said transcoding comprises:
identifying closed captioned data from one or more picture user data segments within a GOP of said DTV data stream;
mapping said closed captioned data into a GOP user data segment of said DVD data stream to generate a DVD data stream capable of displaying said closed captioned data when said DVD data stream is played by a DVD player; and
recording said closed captioned DVD data stream onto a DVD.
Advantageously, said identifying closed captioned data comprises identifying one or more user data start codes in said one or more picture user data segments.
Advantageously, said user data start code comprises the hexadecimal value 0x000001B2.
Advantageously, said mapping comprises:
first identifying one or more first indicators from one or more picture headers corresponding to one or more pictures within said GOP;
first generating one or more first data structures for storing said one or more first indicators; and
second generating one or more second data structures for storing one or more second indicators, said second indicators derived from said first indicators.
Advantageously, said one or more first indicators comprises:
a first variable that indicates whether a top or bottom field is displayed for said first picture within said GOP,
a second variable that indicates whether a first field is repeated; and
a third variable that indicates the temporal position of said one or more pictures within said GOP.
Advantageously, said first variable comprises the
top_field_first field as specified in DVD Specifications for Read-Only Disc, Part 3: Video Specifications Version 1.13.
Advantageously, said second variable comprises the
repeat_first_field field as specified in DVD Specifications for Read-Only Disc, Part 3: Video Specifications Version 1.13.
Advantageously, said third variable comprises the
temporal_reference field as specified in DVD Specifications for Read-Only Disc, Part 3: Video Specifications Version 1.1 3.
Advantageously, said one or more second indicators comprises:
a first variable that indicates if the first display field of the first picture within said GOP is a top or a bottom field; and
a second variable that indicates the number of fields displayed in said GOP.
Advantageously, said first variable comprises the top_field_flag_of_gop field as specified in DVD Specifications for Read-Only Disc, Part 3: Video Specifications Version 1.1 3.
Advantageously, said second variable comprises the number_of_displayed_field_gop field as specified in DVD Specifications for Read-Only Disc, Part 3: Video Specifications Version 1.1 3.
Advantageously, said one or more first data structures comprises one or more picture header linked list nodes.
Advantageously, said one or more second data structures comprises one or more GOP header linked list nodes.
According to an aspect of the invention, a method of transcoding closed captioned data from a DTV data stream into a DVD data stream is provided, said DTV video stream containing V-chip data, said method comprising:
identifying one or more fields capable of displaying said V-chip data;
identifying one or more first indicators that signifies the start of V-chip data transmission;
setting a first flag to a first value if said one or more first indicators signifies said start of V-chip data transmission; and
setting a second flag in said DVD data stream to a second value in order to disable display of said V-chip data when said DVD data stream is played using a DVD player.
Advantageously, the method further comprises:
identifying one or more second indicators that signifies the end of V-chip data transmission;
resetting said first flag if said one or more second indicators signifies said end of V-chip data transmission; and
resetting said second flag in said DVD data stream in order to enable display of said closed captioned data when said DVD data stream is played using said DVD player.
According to an aspect of the invention, a method of generating a DVD capable of displaying closed captioned data is provided comprising transcoding closed captioned data from one or more picture user data segments of a DTV formatted video stream to a GOP user data segment of a DVD formatted video stream.
According to an aspect of the invention, a system for generating a DVD is provided comprising:
a memory;
a set of software instructions resident in said memory;
a control processor for executing said set of software instructions; and
circuitry, said DVD capable of displaying closed captioned data, said closed captioned data derived from a closed captioned DTV data stream.

These and other advantages, aspects, and novel features of the present invention, as well as details of illustrated embodiments thereof, will be more fully understood from the following description and drawings.

### BRIEF DESCRIPTION OF THE DRAWINGS

Figure 1 is an exemplary operational flow diagram illustrating the data stream structure of a typical MPEG2 video data stream in accordance with an embodiment of the invention.

Figure 2 is a system block diagram of a transcoder used in transcoding closed captioned data from a DTV data stream to that of a DVD data stream in accordance with an embodiment of the invention.

Figure 3 is a relational block diagram illustrating a transcoding of closed captioned data from one or more picture user data segments to a GOP user data segment with reference to previously described Figure 1, for example, in accordance with an embodiment of the invention.

Figure 4 is an operational flow diagram describing the process of generating linked list nodes in accordance with an embodiment of the invention.

Figure 5 is an operational block diagram illustrating how V-chip data is invalidated by way of utilizing a control variable in accordance with an embodiment of the invention.

### DETAILED DESCRIPTION OF THE INVENTION

Aspects of the present invention may be found in one or more systems and methods of properly incorporating digital television closed captioning (or closed captioned) data onto a digital versatile disk or digital video disk (DVD). Aspects of the present invention may be found in one or more systems and methods of transcoding closed captioned data from a digital television (DTV) video stream to that of a digital versatile disk (DVD) video stream, in order to properly display closed captioned data. As used herein, the term "transcoding" refers to the process of transforming the format and/or representation of data. By transcoding the closed captioned data prior to recording a DVD, the closed captioned data may be suitably encoded onto a DVD so that it may be properly displayed when the DVD is played back by a DVD player. The format and/or syntax specifications of DTV and DVD video streams may be referenced from one or more of the following documents that are incorporated herein by reference in their entireties:
1. ATSC A/53B, ATSC Standard: Digital Television Standard, Revision B, with Amendment 1
2. SCTE DVS/053, Standard for Carriage of NTSC VBI Data in Cable Digital Transport Streams
3. SCTE DVS/157, SCTE Proposed Standard Methods for Carriage of Closed Captions and Non-Real Time Sampled Video
4. EIA-608-A, Line21 Data Services
5. ISO/IEC 13818-2, Information Technology-Generic Coding of Moving Pictures and Associated Audio Information: Video
6. ISO/IES 11172-2, Information Technology-Coding of Moving Pictures and Associated Audio for Digital Storage Media at up to about 1.5 Mbps
7. DVD Specifications for Read-Only Disc, Part 3: Video Specifications Version 1.13

Both DTV and DVD employ the MPEG-2 standard for the coding of video and the Digital Audio Compression (AC-3) Standard for the coding of audio. However, the closed caption data is stored in different user data segments of their respective data stream structures. Aspects of the present invention facilitate the transcoding of closed captioned data from one or more picture layer user data segments into a GOP (group of pictures) layer user data segment. DTV standards require that closed captioned data is incorporated in picture (layer or level) user data segments. In contrast, DVD standards require that closed captioned data is incorporated in GOP (layer or level) user data segments. After such transcoding is accomplished, a DVD may be recorded and subsequently played, facilitating the display of all closed captioned content originally present in the original DTV video.

In one embodiment of the present invention, a digital television set-top-box incorporates a transcoder that facilitates transcoding of closed captioned data from DTV formatted video. Further, a storage device within an exemplary set-top-box facilitates recording of the transcoded video onto a DVD. In one embodiment, the storage device comprises a hard disk drive. In one embodiment, the transcoder performs transcoding by interfacing between the exemplary hard disk drive and a DVD recorder or "DVD burner".

Various aspects of the invention employ the use of the MPEG2 video compression standard. However, since MPEG2 is a superset of MPEG1 , the one or more methods and systems of the invention may also be implemented utilizing the MPEG1 standard.

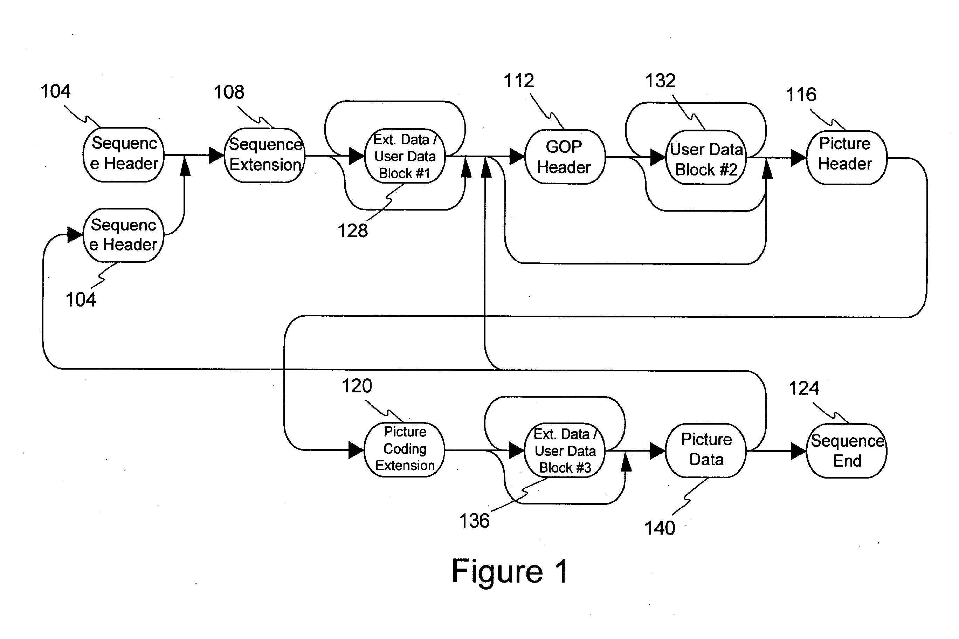

Figure 1 is an exemplary operational flow diagram illustrating the data stream structure of a typical MPEG2 video data stream in accordance with an embodiment of the invention. MPEG2 is utilized in DTV as well as DVD video streams. The operational flow diagram is represented by a series of oval blocks as shown in Figure 1. Each oval block represents a packetization process used to create an MPEG2 video data stream. The packetization performed by each oval block incorporates one or more data segments into the data stream structure. As illustrated, the operational flow diagram comprises one or more sequence header blocks 104, sequence extension blocks 108, GOP header blocks 112, picture header blocks 116, picture coding extension blocks 120, and sequence end code blocks 124. In addition, one or more extension/user data blocks 128, 132, 136, and picture data blocks 140 are incorporated into the data stream structure as indicated. Start codes are used in one or more of these headers and extensions to signify the beginning or end of the one or more segments. For example, a start code may be represented by a three byte start code prefix (e.g., 0×000001) followed by a one byte start code. In one embodiment, the unique start code values identify the type of segment generated by the oval blocks. The start codes are used to identify the beginning of a particular packetization step and serve as identifiers for separating the one or more segments of the data stream structure. Optional user data may be incorporated within the MPEG2 video data stream at three locations 128, 132, 136, within the data stream structure. These three locations in the data stream structure of Figure 1 are designated as user data block #1 128, user data block #2 (or termed GOP user data block) 132, and user data block #3 (or termed picture user data block) 136. All three of the user data blocks 128, 132, 136, share a common syntax in the packetization of any user data segment. The user data blocks 128, 132, 136, incorporate a variable length user data segment into the data stream structure. A user data segment is identified by its characteristic user data start code. The user data start code is pre-appended to the user data. In one embodiment, a user data start code comprises the three byte start code prefix, (0x000001) appended to the byte B2 (in hexadecimal) and is represented using the bit sequence 0x000001B2. If a user data start code is received, the data following the user data start code is considered user data until another start code prefix (0x000001) is received.

DTV Closed Captioned Formatting - Closed captioning in digital television video (DTV) is implemented in user data block #3 (picture user data block) 1 36 of the operational flow diagram shown in Figure 1. User data block #3 generates a segment which will be termed user data segment #3 or picture user data segment. For DTV, the format or syntax of picture level user data as defined by the Advanced Television Systems Committee (ATSC) is specified by the following table:

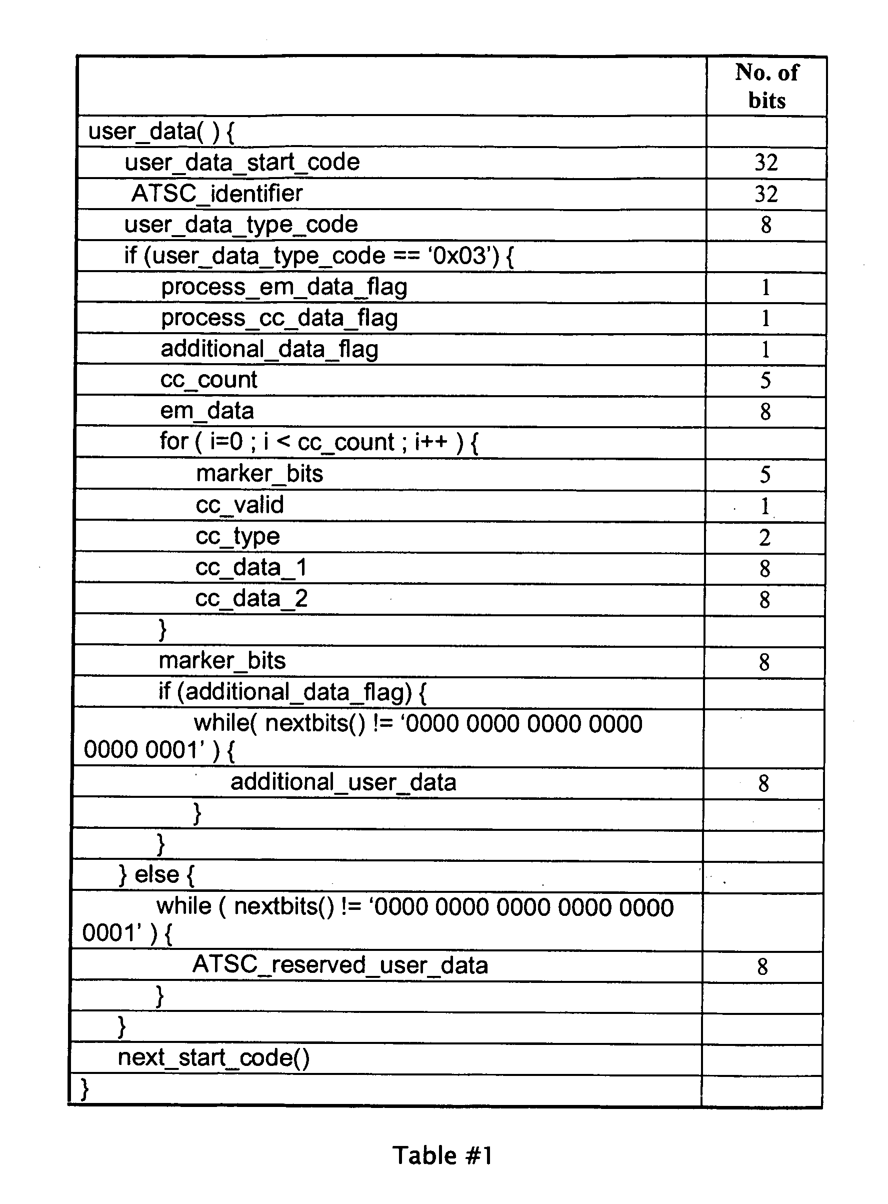

The above listed parameters are defined as follows:
user_data_start_code - set to 0x0000 01B2.

ATSC_identifier - 32 bit code that indicates that the video user data conforms to this specification. The value shall be Ox47413934.

user_data_type_code - The 8-bit code is set to 0×03 for EIA advanced television closed captioning. All other values are reserved for use by ATSC.

process_em_data_flag - This flag is set to indicate whether it is necessary to process the em_data. If it is set to 1, the em_data has to be parsed and its meaning has to be processed. When it is set to 0, the em_data may be discarded.

process_cc_data_flag - This flag is set to indicate whether it is necessary to process the cc_data. If it is set to 1, the cc_data has to be parsed and its meaning has to be processed. When it is set to 0, the cc_data may be discarded.

additional_data_flag - This flag is set to 1 to indicate the presence of additional user data.

cc_count - This 5-bit integer indicates the number of closed captioned constructs following this field. It may have values 0 through 31. The value of cc_count shall be set according to the frame rate and coded picture structure (field or frame) such that a fixed bandwidth of 9600 bits per second is maintained for the closed caption payload data. Sixteen (16) bits of closed caption payload data are carried in each pair of the fields cc_data_1 and cc_data_2.

em_data - Eight bits for representing emergency message.

cc_valid - This flag is set to '1' to indicate that the two closed captioned data bytes that follow are valid. If set to '0' the two data bytes are invalid.

cc_type - Denotes the type of the two closed caption data bytes that follow.

cc_data_1 - The first byte of a closed caption data pair.

cc_data_2 - The second byte of a closed caption data pair.

additional_user_data - Any further demand for picture user data may be met by defining this part of the bit stream.

ATSC_reserved_user_data - Reserved for future use by ATSC.

Similar to closed captioned data, V-chip data (adopted to block television programming based on TV parental guidelines) may be embedded within a user data segment. V-chip data will generally not be shown during DVD playback. As a consequence, V-chip data is differentiated from any closed captioned data. As will be described later, V-chip data may be prevented from being displayed during DVD playback. Since V-chip data is incorporated within user data segments, V-chip data will be considered to be a type (or subset) of closed captioned data.

DVD Closed Captioned Formatting - Unlike DTV closed captioning as described earlier, DVD implements close captioning using User Data Block #2 or GOP user data block, generating a corresponding segment herein termed User Data Segment #2 (or GOP user data segment). As illustrated in Figure 1, DVD incorporates closed captioned data in the GOP layer of the MPEG2 video data stream. The format or syntax is specified in the following table:

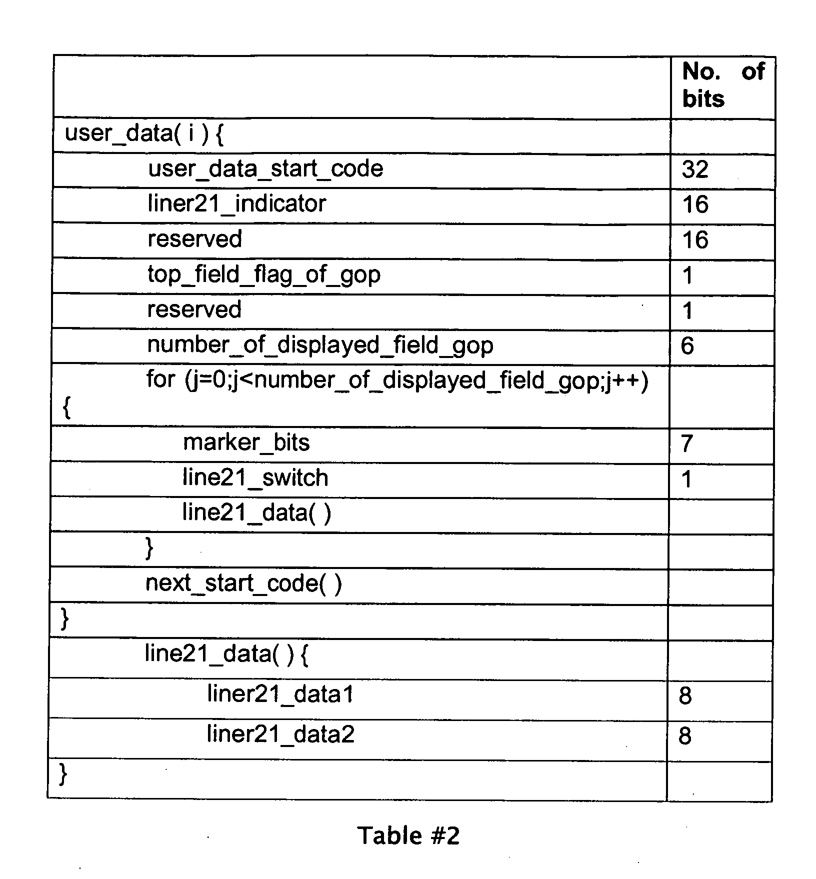

The parameters used in Table #2 may be defined as follows:
user_data_start_code - set to 0x0000 01 B2.

line21_indicator - set to 0x4343 to indicate the following user data is for line 21 data.

top_field_flag_of_gop - set to 1 if the first display field of the first picture in the GOP is a top field. It shall be 0 if the first display field of the first picture in the GOP is a bottom field. For ISO/IEC 11172-2 compliant bitstreams with picture_rate=29.97Hz, top_field_flag_of_gop shall be 1.

number_of_displayed_field_gop - indicates the number of displayed fields in the GOP and shall be identical to the number of line21_data( ) recorded in the following loop. For ISO/IEC 11172-2 compliant bitstreams with picture_rate=29.97Hz, this shall also be equal to the number of pictures in the GOP multiplied by two.

line21_switch_ set to 1 if line21 _data is valid. If it is set to 0, the line21 data is invalid and shall be ignored.

line21 _data - this function contains either line21 field one data or line21 field two data.

line21_data1 - one byte, in which the MSB of line21_data 1 is an odd parity bit which indicates the parity of the following 7 bit data. The 7 bits represent the data of character defined by Part two of EIA-608.

line21_data2 - one byte, in which the MSB of line21 _data2 is an odd parity bit which indicates the parity of the following 7 bit data. The 7 bits represent the data of character defined by Part two of EIA-608.

Referring to Table #2, the total number of line21 _data is identical to the value of number_of_displayed_field_gop. In other words, the value provided by the number_of_displayed_field_gop corresponds to the number of displayed fields in the GOP. The nth line21_data corresponds to the nth displayed field in the GOP. In one embodiment, if the nth display field is a top field, then the line21 _data associated with this field corresponds to line21 field one data. However, if the nth display field is a bottom field, then the line21 _data associated with this field corresponds to line21 field two data. Referring to Table #1, in one embodiment, cc_count=2 for repeat_first_field=0 and cc_count=3 for repeat_first_field=1. All other data is discarded for cc_count>3. As a consequence, all valid DTV closed captioned data is transcoded when cc_count<=3. Thus, there is no closed captioned data lost during the transcoding process. For MPEG2 video, repeated fields (which indicates the number of fields in a frame) and the ordering of fields (i.e., whether a top or bottom field occurs first) during display of each coded picture is indicated by the repeat_first_field and top_field_first variables. These two variables are located in the picture coding extension block as referenced in Figure 1.

Aspects of the present invention transcode the DTV closed captioned data stream provided by each picture into a DVD closed captioned data stream. The one or more pictures (e.g., 12-15 in a typical GOP) are provided in a temporal order characteristic of an MPEG video data stream. However, during transcoding of a DTV stream onto a DVD, all closed captioned data provided by the one or more pictures in the one or more GOPs are reordered so that it is displayed in meaningful text. The reordered closed captioned data is then appropriately recorded or "burned" onto a DVD. In one embodiment, the reordering is accomplished using a variable that determines the temporal order of the one or more pictures. In one embodiment, the variable is termed temporal_reference as defined in the DVD Specifications for Read-Only Disc, Part 3: Video Specifications Version 1.13. Each picture header contains a variable that defines the temporal relationship of pictures in an MPEG2 video data stream. This variable is termed temporal_reference.

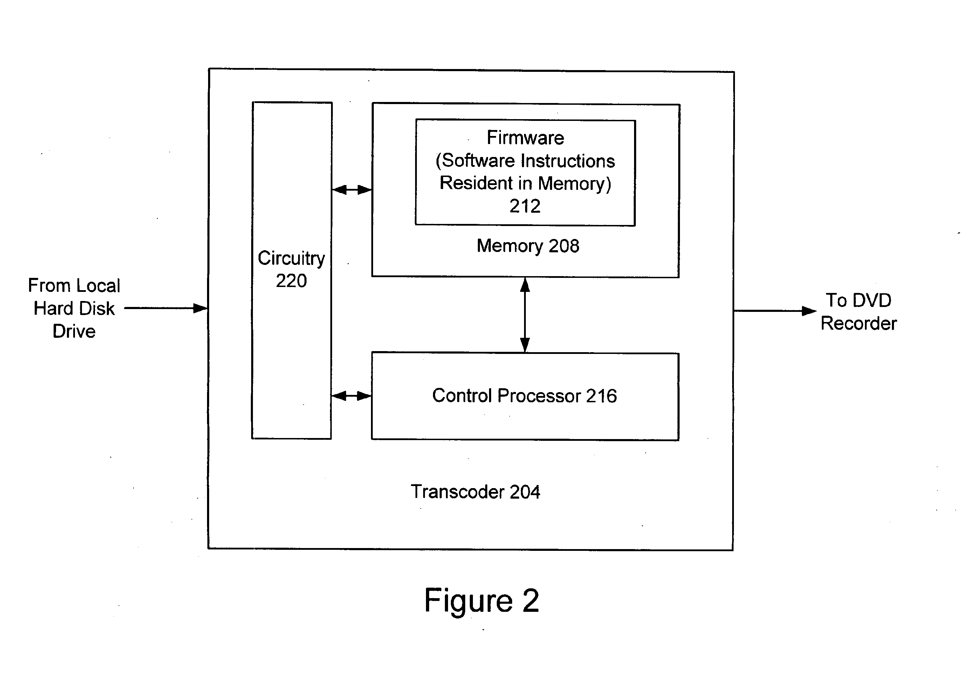

Figure 2 is a system block diagram of a transcoder 204 used in transcoding closed captioned data from a DTV data stream to that of a DVD data stream in accordance with an embodiment of the invention. The transcoder 204 comprises a memory 208, firmware 212, a control processor 216, and circuitry 220. The firmware 212 comprises a set of software instructions resident in the memory 208. The control processor 216 interfaces and communicates with the memory 208 in order to execute the firmware 212. The circuitry 220 may comprise interface hardware used to buffer and communicate data signals between the transcoder 204 and an exemplary local hard disk drive or a DVD recorder. The control processor 216 may also provide one or more control signals to the circuitry 220 that facilitate processing of any DTV data provided by the exemplary hard disk drive. The circuitry 220 may comprise logic circuitry and buffers. The circuitry 220 may facilitate processing of the DTV data provided by the hard disk drive as well as processing related to transmitting the MPEG2 video data stream into a DVD recorder.

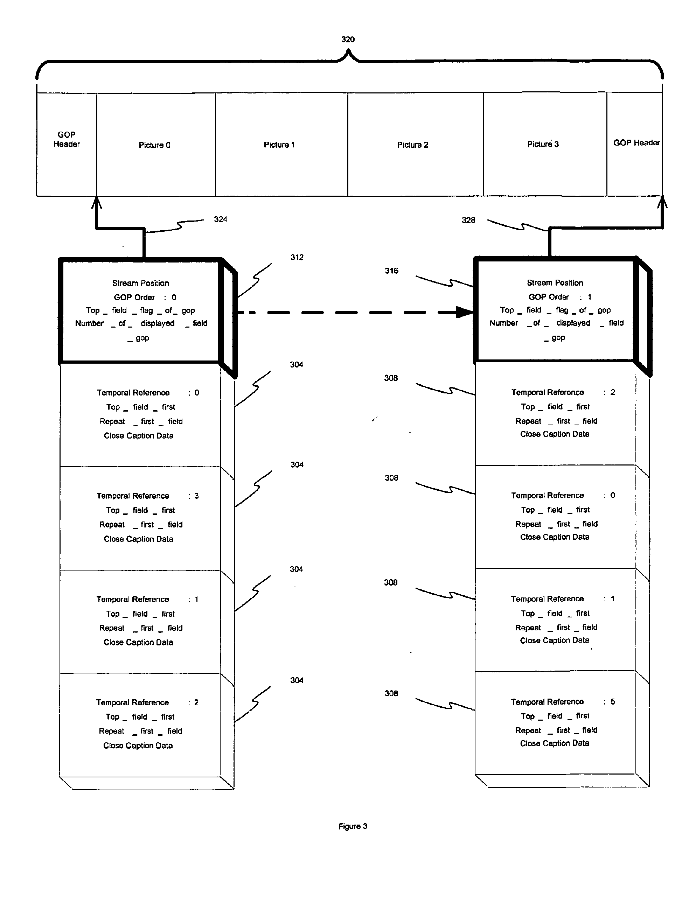

Figure 3 is a relational block diagram illustrating a transcoding of closed captioned data from one or more picture user data segments to a GOP user data segment in relation to previously described Figure 1, for example, in accordance with an embodiment of the invention. Figure 3 illustrates the transcoding of closed captioned data by using one or more data structures, as may be used by a computer programmer. In this embodiment, the one or more data structures comprise picture header linked list nodes and GOP header linked list nodes. For example, Figure 3 depicts two sets of picture header linked list nodes 304, 308, each represented using four blocks. The one or more blocks within each set of linked list nodes (i.e., 304 or 308) may inter-reference other blocks within the same set. Each block may represent a picture type and temporal reference, for example. The first picture header linked list node 304 is associated with its corresponding GOP header linked list node 312 while the second picture header linked list node 308 is associated with its corresponding GOP header linked list node 316. In this embodiment, the first GOP, in the embodiment of Figure 3, is represented by an exemplary four pictures while the second GOP is also represented by an exemplary set of four pictures. As illustrated, each picture (and its corresponding picture linked list node) is characterized by three variables, temporal_reference, top_field_first, and repeat_first_field. In one embodiment, temporal_reference, top_field_first, and repeat_first_field are packetized by the picture header block (cf. 116 of Figure 1) of a typical MPEG2 video data stream. In one embodiment, the picture header linked list nodes 304, 308 comprise data associated with the variables - temporal_reference, top_field_first, and repeat_first_field. The closed captioned data is incorporated into the picture user data segment of the one or more pictures. As previously described, the picture user data segment is generated by way of user data block #3 or picture user data block (as shown in Figure 1). Similarly, two GOP header linked list nodes 312, 316 comprise data that is generated from their corresponding picture linked list nodes 304, 308. In one embodiment, each of the GOP header linked list nodes 312, 316 comprise data associated with the variables - top_field_flag_of_gop and number_of_displayed_field_gop. The data provided by each picture header linked list node 304, 308 contributes to building its associated GOP header linked list node. The GOP header linked list node also comprises a GOP reference number or GOP counter that identifies each GOP within the MPEG2 video data stream.

Prior to recording a DVD, one or more start codes of the MPEG2 video data stream is checked. If the start code corresponds to a GOP header, a new linked list node for the GOP is established. The node will record GOP count information and allocate space for storing values provided by top_field_flag_of_gop and number_of_displayed_field_gop, for example. The GOP header linked list node 312 provides a pointer to the next GOP header link list node 316. As shown in Figure 3, the pointer is represented as a dotted arrow pointing from one linked list node to the next linked list node. In addition to storing the values provided by temporal_reference, top_field_first, repeat_first_field, the picture linked list data may also store closed captioned data information provided by variables such as cc_count, cc_valid, and cc_type.

Figure 3 also displays the use of the GOP and picture header linked list nodes in the formation of the DVD video data stream 320. As shown, data provided by the GOP and picture header linked list nodes are inserted in user data segment #2 (e.g., GOP user data block). In the embodiment of Figure 3, the exemplary DVD data stream 320 displays four pictures per GOP. The arrows 324, 328 indicate insertion points where the linked list node (304, 312), (308, 316) data is inserted or packetized into the DVD data stream 320. The GOP header and picture header linked list nodes provide an organizational data structure that facilitates transcoding of closed captioned data from a DTV to a DVD data stream. As a result, a DVD may be subsequently recorded that incorporates a displayable closed captioned data.

In order to sort the closed captioned data into its temporal order, a reordering of pictures is performed by sorting the pictures using the exemplary temporal_reference variable specified by a picture link list node. One cc_data byte maps to one line21 _data byte while the order of cc_data output from each picture link list node is controlled by the two variables - top_field_first and repeat_first_field flag as shown in Table #3 below.

**Table #3**

| Top_field_first | Repeat_first_field | Displayed_field_count | field_order | cc_count |
|---|---|---|---|---|
| 0 | 0 | 2 | BT | 2 |
| 0 | 1 | 3 | BTB | 3 |
| 1 | 0 | 2 | TB | 2 |
| 1 | 1 | 3 | TBT | 3 |

Note that B represents a bottom field while T represents a top field. The number and ordering of fields is described in Table #3. For each field, line21 _switch variable is set based on its corresponding cc_valid variable. For example, if cc_valid equals 1, line21_switch is set to 1; otherwise, line21_switch is set to 0.

In relation to the embodiment of Figure 3, the transcoding method illustrated provides a temporal reordering and consolidation of each set of four picture user data segments into a single GOP user data segment.

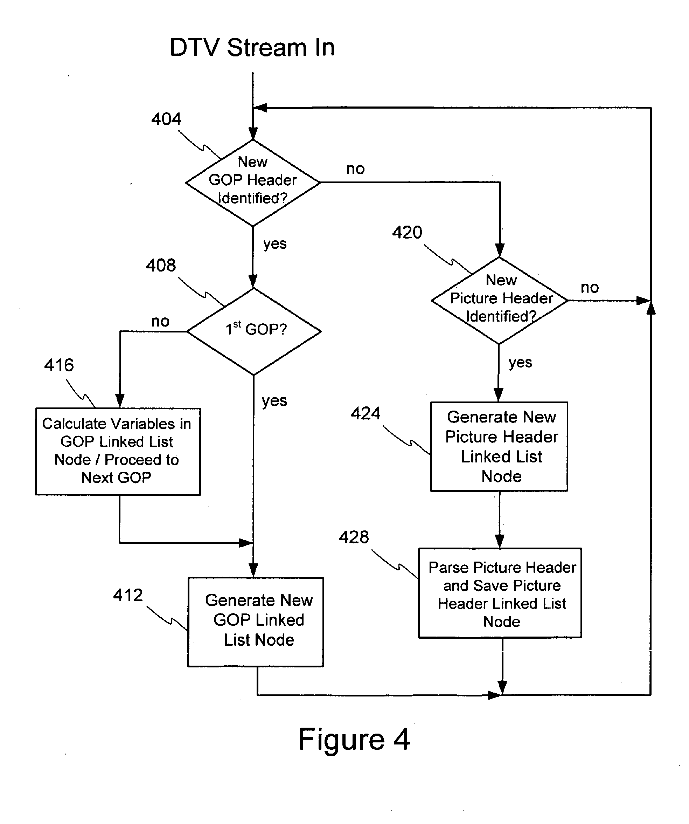

Figure 4 is an operational flow diagram describing the process of generating linked list nodes in accordance with an embodiment of the invention. As shown, an incoming DTV video stream is monitored for headers. At step 404, a DTV video stream is monitored for GOP headers. If a GOP header is identified, the process proceeds with step 408. At step 408, an evaluation is made whether the GOP represents the first GOP in the DTV stream. If the received GOP is the first GOP in the stream, an associated GOP header linked list node is generated at step 412. If the received GOP is not the first GOP in the stream, one or more variables in the first GOP linked list node are calculated using the variables provided by an associated picture linked list node, as illustrated in step 416. Thereafter, the first GOP in the stream is parsed out and the second (or next) GOP is processed. At step 412, an associated GOP linked list node is generated for the second GOP (or next GOP). Then, the process reverts back to step 404 where a new GOP header may be identified. If, at step 404, a new GOP header is not identified, the process proceeds with step 420. At step 420, an assessment is made whether the header is a picture header. If the header is a picture header, a new picture header linked list node is generated at step 424. Then, at step 428, the picture header is parsed while the picture header linked list node is saved. Thereafter, the process continues at step 404. If, on the other hand, a new picture header is not identified at step 420, the process reverts back to step 404, where monitoring of DTV stream headers resumes.

When V-chip information (adopted to block television programming based on TV parental guidelines) is embedded in picture user data of DTV, it is embedded only into field #2 (or the bottom field (e.g., cc_type=1)). After performing the transcoding process, V-chip data is not implemented on DVD. As a result, it is critical that the DVD player prevents the display of V-chip data when a DVD is played. DVD requirements prevent the algorithm from discarding the V-chip data because this would interfere with correct DTV field to DVD field mapping. As a consequence, V-chip data is dealt with accordingly.

In one embodiment, the use of V-chip data is controlled by way of a new internal control flag or variable executed in the firmware resident in memory as was shown in relation to the transcoder of Figure 2. This exemplary flag or variable is used to validate each field's closed captioned data. For each field #2 or bottom field's closed captioned data, the control flag or variable may be used to determine whether V-chip data is present in the bottom field. If this control flag or variable is set, its corresponding line21 _switch is configured by the firmware to the value 0. As a consequence, any V-chip data written into the corresponding GOP user data segment is labeled as invalid. Hence, during DVD playback, the decoding engine discards any V-chip closed captioned data. As a consequence, V-chip data is not be displayed during playback using a DVD player.

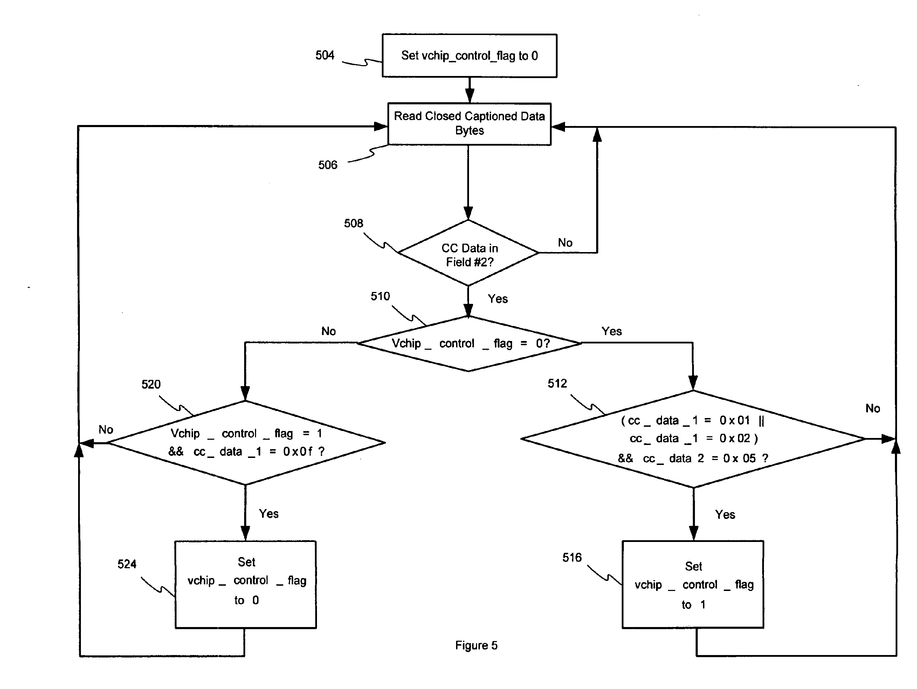

Figure 5 is an operational block diagram illustrating how V-chip data is invalidated by way of utilizing a control variable in accordance with an embodiment of the invention. In the embodiment of Figure 5, the control variable is termed vchip_control_flag. Again, vchip_control_flag is used to control the line21 _switch variable. Line21_switch is incorporated into the GOP user data segment of the DVD data stream structure. At step 504, vchip_control_flag is set to 0 as an initialization step. Next at step 506, two bytes of closed captioned data is read. For example, cc_data_1 and cc_data_2 is read. Next, at step 508, an assessment is made whether the closed captioned data encountered by the transcoder is to be displayed in field #2 (e.g., bottom field) or field #1 (e.g., top field). If the closed captioned data is associated with field #2, then the possibility exists that the closed captioned data may be V-chip data. If the closed captioned data is associated with field #2, the process proceeds to step 510. However, if the closed captioned data is associated with field #1, the process reverts back to step 506, in which additional closed captioned data is evaluated. At step 510, the variable vchip_control_flag is evaluated. If vchip_control_flag equals the value zero, then the process continues with step 512. At step 512, the transcoder monitors the variables cc_data_1 and cc_data_2. If cc_data_1 is equal to 0x01 or 0x02 while cc_data_2 is equal to 0x05, then the closed captioned data that follows corresponds to V-chip data. In this embodiment, the variables cc_data_1 and cc_data_2 act as indicators for the start of V-chip data (e.g., act as V-chip start codes). Hence, when two bytes of closed captioned data correspond to either the hex values 0x0105 or 0x0205, the following data corresponds to V-chip data. If either of the two values 0x0105 or 0x0205 are detected, the process continues at step 516. At step 516, vchip_control_flag is set to the value one, which resets the line21_switch variable to the value zero. Hence, any line21_data that follows is considered invalid by the DVD player, and will not be displayed. If, on the other hand, the values 0x0105 or 0x0205 are not detected, then the process continues at step 506, in which additional two bytes of closed captioned data are read, for example. If at step 510, vchip_control_flag is equal to the value one (signifying the presence of V-chip data), the process continues at step 520. At step 520, the value of cc_data_1 is evaluated. If cc_data_1 equals the value 0x0f, the process proceeds to step 524. When cc_data_1 equals 0x0f, V-chip transmission has ended, signifying that the following data will be closed captioned data. (The variable cc_data1, in this embodiment, acts as an indicator to signify the end of V-chip data.) Otherwise, the process reverts back to step 506, in which an additional V-chip data is read. At step 524, vchip_control_flag is set to zero, signifying that the byte pair to be received constitutes closed captioned data.

While the invention has been described with reference to certain embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiment disclosed, but that the invention will include all embodiments falling within the scope of the appended claims.

## Claims

1. A method of generating a DVD capable of displaying closed captioned data, said closed captioned data derived from a closed captioned DTV data stream, said method comprising transcoding closed captioned data from said closed captioned DTV data stream to a DVD data stream.

2. The method of Claim 1 wherein said transcoding comprises:
identifying closed captioned data from one or more picture user data segments within a GOP of said DTV data stream;
mapping said closed captioned data into a GOP user data segment of said DVD data stream to generate a DVD data stream capable of displaying said closed captioned data when said DVD data stream is played by a DVD player; and
recording said closed captioned DVD data stream onto a DVD.

3. The method of Claim 2 wherein said identifying closed captioned data comprises identifying one or more user data start codes in said one or more picture user data segments.

4. The method of Claim 3 wherein said user data start code comprises the hexadecimal value 0x000001B2.

5. The method of Claim 2 wherein said mapping comprises:
first identifying one or more first indicators from one or more picture headers corresponding to one or more pictures within said GOP;
first generating one or more first data structures for storing said one or more first indicators; and
second generating one or more second data structures for storing one or more second indicators, said second indicators derived from said first indicators.

6. The method of Claim 5 wherein said one or more first indicators comprises:
a first variable that indicates whether a top or bottom field is displayed for said first picture within said GOP,
a second variable that indicates whether a first field is repeated; and
a third variable that indicates the temporal position of said one or more pictures within said GOP.

7. A method of transcoding closed captioned data from a DTV data stream into a DVD data stream, said DTV video stream containing V-chip data, said method comprising:
identifying one or more fields capable of displaying said V-chip data;
identifying one or more first indicators that signifies the start of V-chip data transmission;
setting a first flag to a first value if said one or more first indicators signifies said start of V-chip data transmission; and
setting a second flag in said DVD data stream to a second value in order to disable display of said V-chip data when said DVD data stream is played using a DVD player.

8. The method of Claim 7 further comprising:
identifying one or more second indicators that signifies the end of V-chip data transmission;
resetting said first flag if said one or more second indicators signifies said end of V-chip data transmission; and
resetting said second flag in said DVD data stream in order to enable display of said closed captioned data when said DVD data stream is played using said DVD player.

9. A method of generating a DVD capable of displaying closed captioned data comprising transcoding closed captioned data from one or more picture user data segments of a DTV formatted video stream to a GOP user data segment of a DVD formatted video stream.

10. A system for generating a DVD comprising:
a memory;
a set of software instructions resident in said memory;
a control processor for executing said set of software instructions; and
circuitry, said DVD capable of displaying closed captioned data, said closed captioned data derived from a closed captioned DTV data stream.
